# EUROPÄISCHE PATENTSCHRIFT

(11) **EP 3 543 200 B1**
(45) Veröffentlichungstag und Bekanntmachung des Hinweises auf die Patenterteilung: **06.05.2026**
(21) Anmeldenummer: 19161824.8
(22) Anmeldetag: 11.03.2019
(51) Int. Cl.: B66F 9/07, B65G 1/04

(54) **VERFAHREN ZUR STEUERUNG EINES REGALBEDIENGERÄTS**
METHOD OF CONTROLLING SHELF ACCESS EQUIPMENT
PROCÉDÉ DE COMMANDE D'UN TRANSTOCKEUR

(30) Priorität: 12.03.2018 DE 102018105681
(43) Veröffentlichungstag der Anmeldung: 25.09.2019
(73) Patentinhaber: Lenze SE (Societas Europaea), 31855 Aerzen (DE)
(72) Erfinder: Nottbrock, Thomas, 32758 Detmold (DE)
(74) Vertreter: Freischem & Partner Patentanwälte mbB

(56) Entgegenhaltungen:
- WO-A2-2016/094923
- DE-A1- 102010 007 275
- DE-A1- 102014 220 165
- JP-A- 2008 081 219
- JP-A- 2011 006 228
- JP-A- 2014 201 402
- JP-A- 2015 113 201
- YASKAWA ELECTRIC CORPORATION: "Contributing to the Environment through Products and Services Introduction of Application Example of DC Multilink", YASKAWA REPORT 2014, 1 September 2014 (2014-09-01), pages 38 - 39, XP055265335, Retrieved from the Internet <URL:https://www.yaskawa-global.com/wp-content/uploads/2014/11/ar2014e-21.pdf> [retrieved on 20160414]

## Beschreibung

Die Erfindung betrifft ein Verfahren zur Steuerung eines Regalbediengeräts sowie ein Regalbediengerät und einen Regalbediengeräteverbund.

Ein Regalbediengerät (RBG) ist eine geführte, insbesondere schienengeführte, Einrichtung zur Einlagerung und/oder Auslagerung von Waren in ein Hochregallager.

Regalbediengeräte der in Rede stehenden Art verfügen über Lastaufnahmemittel, welche die Ladung, also die einzulagernden und/oder auszulagernden Waren, direkt und/oder mittels Ladehilfsmitteln, wie beispielsweise Paletten, aufnehmen und manipulieren kann.

Regalbediengeräte der in Rede stehenden Art können aufgrund der geführten Bewegungen Einlagerungsplätze mit dem Lastaufnahmemittel vergleichsweise schnell anfahren. Zudem kann ihre Steuerung automatisiert werden. Hierdurch sind Regalbediengeräte immer dann in vorteilhafter Weise einsetzbar, wenn eine große Zahl Ein- und/oder Auslagerungsvorgänge in einer vergleichsweise kurzen Zeit erfolgen soll. Entsprechend verfügen Regalbediengeräte über vergleichsweise leistungsfähige elektrische Antriebe, die vergleichsweise schnelle Bewegungen und insbesondere Beschleunigungen der Fahrbewegungen des Regalbediengeräts ermöglichen.

Unter Fahrbewegungen ist in diesem Zusammenhang insbesondere jede Bewegung zu verstehen, mit der die absolute Position des Lastaufnahmemittels verändert wird. Insbesondere sind dies typischerweise horizontale und/oder vertikale Bewegungen. Hierbei ist es regelmäßig so, dass für Fahrbewegungen des Lastaufnahmemittels in einer Richtung das Lastaufnahmemittel entlang einer Führung bewegt wird und für Bewegungen des Lastaufnahmemittels in einer weiteren, von der ersten Richtung verschiedenen zweiten Richtung die Führung selbst, beispielsweise entlang einer Schiene, bewegt wird.

Diese Führung kann beispielsweise in Gestalt eines Mastes oder Rahmens ausgeführt sein. Oft wird diese bewegliche Führung mit dem daran beweglichen Lastaufnahmemittel als das eigentliche Regalbediengerät bezeichnet. Im häufigsten Fall wird die bewegliche Führung des Regalbediengeräts horizontal bewegt, das Lastaufnahmemittel bewegt sich an der Führung in vertikaler Richtung.

Um den Vorteil eines solchen Regalbediengeräts - nämlich die Ermöglichung möglichst vieler Ein- und/oder Auslagerungsvorgänge (im Folgenden zur sprachlichen Vereinfachung gemeinsam als Regalbedienvorgänge bezeichnet) - nutzen zu können, muss das Lastaufnahmemittel zügig durch das Regalbediengerät bewegt werden. Während das Lastaufnahmemittel die Ladung manipuliert, stehen die Antriebe, mit denen das Lastaufnahmemittel verfahren wird, jedoch still. Hinzu kommt, dass durch das Regalbediengerät normalerweise vergleichsweise kurze Strecken überbrückt werden. Beschleunigungen und Abbremsungen, die sinnvollerweise, insbesondere beim Absenken von Lasten, zumindest weitgehend durch den generatorischen Betrieb der Antriebe realisiert werden, haben daher einen großen Anteil an dem Bewegungsmuster eines Regalbediengerätes.

Dies führt dazu, dass die Gesamtleistungsaufnahme - bei Bremsvorgängen und/oder Absenkvorgängen auch Gesamtleistungsabgabe - in Rede stehender Regalbediengeräte häufig Lastspitzen aufweist, in denen die Leistungsaufnahme und/oder Leistungsabgabe der Antriebe des Regalbediengeräts wesentlich höher ist als die über längere Zeit gemittelte durchschnittliche gemeinsame Leistungsaufnahme der Antriebe des Regalbediengeräts.

Dies führt dazu, dass die Energiekosten zum Betrieb eines Regalbediengeräts vergleichsweise hoch sind. Die Kosten für das Abrufen elektrischer Spitzenleistungen bzw. für das Rückspeisen elektrischer Spitzenleistungen sind deutlich höher, als es die Kosten für den Bezug der gleichen Energiemenge bei vergleichsweise konstanter Leistung wären. Der Grund hierfür liegt darin, dass auf Seiten des Energieversorgungsnetzes die Abdeckung solcher Leistungsspitzen schlichtweg mit höherem technischem Aufwand verbunden ist als die Bereitstellung konstanter elektrischer Leistungen. Auch sind die Anforderungen an die elektrische Infrastruktur entsprechend hoch, um die Leistungsspitzen überhaupt abdecken zu können. Dies betrifft insbesondere die Auslegung der benötigten Leitungsquerschnitte und/oder Geräte auf der Netzseite.

In der Vergangenheit sind daher Regalbediengeräte entwickelt worden, die einen Energiespeicher zur Speicherung elektrischer Energie aufweisen. Energiespeicher nach dem Stand der Technik sind in der Lage, auftretende Lastspitzen in begrenztem Umfang zu reduzieren. Üblicherweise wird hierfür ein Energiespeicher zum Zwischenkreis eines Umrichters des Regalbediengeräts parallelgeschaltet. Hierdurch kann das vorstehend geschilderte Problem zwar reduziert werden, jedoch kann es, abhängig von den Fahrbewegungen, die das Regalbediengerät durchführt, und der daraus resultierenden Leistungsaufnahme bzw. Leistungsabgabe dazu kommen, dass die im Energiespeicher gespeicherte Energie und/oder die Kapazität des Energiespeichers nicht ausreicht, um alle auftretenden Leistungsspitzen auszugleichen. Um dies zu erreichen wäre es notwendig, die Energiespeicher mit einer entsprechend hohen Kapazität auszulegen. Dies wiederum wäre mit entsprechend hohen Kosten verbunden. Ein Verfahren gemäß dem Oberbegriff des Anspruchs 1 sowie ein Regalbediengerät gemäß dem Oberbegriff des Anspruchs 12 ist aus der JP 2008 081219 A bekannt. Ein Regalbediengeräteverbund gemäß dem Oberbegriff des Anspruchs 13 ist aus der JP 2011 006228 A bekannt.

Der Erfindung liegt daher die Aufgabe zugrunde, ein Verfahren zur Steuerung eines Regalbediengeräts sowie ein Regalbediengerät und einen Regalbediengeräteverbund aufzuzeigen, die eine effizientere Ausnutzung der Kapazität des Energiespeichers ermöglichen.

Die Aufgabe wird gelöst durch ein Verfahren sowie ein Regalbediengerät und einen Regalbediengeräteverbund mit den Merkmalen der unabhängigen Ansprüche. Die Merkmale der abhängigen Ansprüche betreffen vorteilhafte Ausführungsformen.

Erfindungsgemäß wird wenigstens ein elektrischer Betriebsparameter des Regalbediengeräts überwacht und abhängig von diesem elektrischen Betriebsparameter die Einspeisung von elektrischer Energie in den Energiespeicher und/oder die Entnahme von elektrischer Energie aus dem Energiespeicher gesteuert.

Hierdurch wird es ermöglicht, den Energiespeicher effizienter einzusetzen. Bei diesem kann es sich beispielsweise um einen sogenannten Superkondensator handeln. Insbesondere wird es hierdurch ermöglicht, die Menge der im Energiespeicher gespeicherten Energie immer so anzupassen, dass der Energiespeicher noch genug Kapazität zur Aufnahme von der von den Antrieben des Regalbediengeräts abgegebenen elektrischen Energie und/oder noch genug gespeicherte Energie zur Deckung des gemeinsamen Energiebedarfs der elektrischen Antriebe des Regalbediengeräts aufweist. Insbesondere bedeutet dies, dass der Energiespeicher noch genug Kapazität zur Aufnahme von der von den Antrieben des Regalbediengeräts bei zumindest der nächsten Fahrbewegung abgegebenen elektrischen Energie und/oder noch genug gespeicherte Energie zur Deckung des gemeinsamen Energiebedarfs der elektrischen Antriebe des Regalbediengeräts bei zumindest der nächsten Fahrbewegung aufweist.

Unter einem elektrischen Betriebsparameter des Regalbediengeräts sind erfindungsgemäß die momentane elektrische Leistungsaufnahme aus dem Energieversorgungsnetz und/oder Leistungsabgabe des Regalbediengeräts in das Energieversorgungsnetz zu verstehen. Auch hierbei kann es sich um die Leistungsaufnahme und/oder Leistungsabgabe eines einzelnen Antriebs und/oder um die gemeinsame Leistungsaufnahme und/oder gemeinsame Leistungsabgabe einer Mehrzahl Antriebe, insbesondere sämtlicher Antriebe des Regalbediengeräts, handeln.

Letzterer Fall ist insbesondere deswegen von Bedeutung, da die gemeinsame Leistungsaufnahme und/oder gemeinsame Leistungsabgabe sämtlicher Antriebe des Regalbediengeräts in der Praxis - zumindest im Wesentlichen - der gesamten Leistungsaufnahme aus dem Energieversorgungsnetz und/oder Leistungsabgabe des Regalbediengeräts in das Energieversorgungsnetz entspricht.

Vor diesem Hintergrund kann, wenn das Regalbediengerät über einen Umrichter mit dem Netz verbunden ist, die momentane Leistungsaufnahme und/oder Leistungsabgabe des Regalbediengeräts insbesondere dadurch ermittelt werden, dass ein Stromwandler, insbesondere ein potenzialfreier Stromwandler, den Netzstrom erfasst, insbesondere misst, und der ermittelte Wert für den Netzstrom mit dem erfassten, insbesondere gemessenen, Wert der Zwischenkreisspannung des Umrichters des Regalbediengeräts verrechnet, insbesondere multipliziert wird. Im Rahmen der Verrechnung des Netzstroms mit der Zwischenkreisspannung kann eine weitere Verrechnung, insbesondere Multiplikation, mit einer gerätespezifischen Größe, insbesondere Konstante, erfolgen. Auch kann eine Größe, insbesondere das Ausgangssignal des Stromwandlers, gleichgerichtet und/oder geglättet werden, um die Netzleistung zu ermitteln bzw. zu verrechnen.

Alternativ und/oder ergänzend kann die Spannung einer Motorphase gemessen und aus dieser die Wirkleistung des Motors ermittelt, insbesondere berechnet, werden. Dies ermöglicht es wiederum, die Netzleistung, insbesondere über ein Verlustmodell, zu ermitteln, insbesondere zu berechnen.

Ergänzend kann es sich bei dem elektrischen Parameter um die im Energiespeicher gespeicherte Menge elektrischer Energie handeln. Alternativ und/oder ergänzend kann es sich um den Serienersatzwiderstand und/oder die Kapazität des Energiespeichers handeln.

Die Überwachung des elektrischen Betriebsparameters kann insbesondere durch die direkte Messung dieses Parameters realisiert sein. Die Messung kann kontinuierlich und/oder in Intervallen erfolgen. Grundsätzlich kann die Überwachung des elektrischen Betriebsparameters auch indirekt erfolgen, beispielsweise indem der Energiebedarf zukünftiger Fahrbewegungen des Regalbediengeräts rechnerisch ermittelt und der Steuerung der Einspeisung von elektrischer Energie in den Energiespeicher und/oder der Entnahme von elektrische Energie aus dem Energiespeicher zugrunde gelegt wird.

Die Steuerung der Einspeisung von elektrischer Energie in den Energiespeicher und/oder der Entnahme von elektrischer Energie aus dem Energiespeicher kann in Abhängigkeit von wenigstens einer zukünftigen Fahrbewegung des Regalbediengeräts erfolgen. Dies hat den Vorteil, dass bereits vor der auftretenden Lastspitze auf die zukünftige Einspeisung von elektrischer Energie in den Energiespeicher und/oder die zukünftige Entnahme elektrischer Energie aus dem Energiespeicher reagiert werden kann.

Hierbei kann insbesondere die Menge der im Energiespeicher gespeicherten Energie derart angepasst werden, dass die im Rahmen der zukünftigen Fahrbewegung vom Energiespeicher aufzunehmende und/oder abzugebende Energie vom Energiespeicher aufgenommen und/oder abgegeben werden kann. Auf diese Weise kann beispielsweise vor dem Auftreten eines erhöhten Energieverbrauchs der Antriebe die Menge der elektrischen Energie im Energiespeicher erhöht werden. Alternativ und/oder ergänzend kann vor dem Auftreten einer erhöhten Energieabgabe durch die Antriebe im generatorischen Betrieb die Menge der im Energiespeicher gespeicherten elektrischen Energie gesenkt werden, damit ein möglichst großer Anteil der im generatorischen Betrieb erzeugten elektrischen Energie vom Energiespeicher aufgenommen werden kann.

Es können Daten betreffend wenigstens eines zukünftigen Fahrauftrages in einer Datenspeichereinrichtung gespeichert werden. Diese Daten können für die Steuerung der Einspeisung von elektrischer Energie in den Energiespeicher und/oder für die Steuerung der Entnahme von elektrischer Energie aus dem Energiespeicher genutzt werden. Die Datenspeichereinrichtung kann hierbei Bestandteil des Regalbediengeräts sein. Alternativ und/oder ergänzend kann die Datenspeichereinrichtung Bestandteil einer der Steuerung des Regalbediengeräts übergeordneten Steuerung sein. Bei dieser kann es sich beispielsweise um ein Computersystem, einen Controller und/oder eine speicherprogrammierbare Steuerung handeln.

Durch die Nutzung der Daten wird es ermöglicht, dass vom Regalbediengerät durchzuführende Regalbedienvorgänge vor deren Durchführung im Hinblick auf deren Fahrbewegungen analysiert werden können. Die Steuerung kann dann in Abhängigkeit dieser zukünftigen Fahrbewegungen erfolgen. Die Datenspeichereinrichtung kann, beispielsweise über eine geeignete Schnittstelle, mit einem, insbesondere computerbasierten, Logistiksystem verbunden sein. Auf diese Weise können die zukünftigen Regalbedienvorgänge aus dem Logistiksystem ausgelesen werden und stehen der Steuerung des Regalbediengeräts für die Durchführung des Verfahrens zur Steuerung des Regalbediengeräts zur Verfügung.

Im Rahmen des Verfahrens zur Steuerung eines Regalbediengeräts kann der Serienersatzwiderstand und/oder die Kapazität des Speichers ermittelt werden. Abhängig vom Ergebnis der Ermittlung kann ein Signal ausgegeben werden. Das Signal kann insbesondere bei Überschreitung und/oder Unterschreitung eines vorgegebenen Grenzwertes für den Serienersatzwiderstand und/oder die Kapazität ausgegeben werden. So kann das Signal beispielsweise bei einer Überschreitung von 150 % des Serienersatzwiderstands im Neuzustand, insbesondere bei Überschreitung von 200 % des Serienersatzwiderstands des Energiespeichers im Neuzustand, ausgegeben werden. Es kann sich um ein optisches und/oder akustisches Signal handeln. Hierdurch ist es möglich, die Funktionsfähigkeit des Energiespeichers zu überwachen. Durch das Signal wird ein rechtzeitiger Austausch des Energiespeichers ermöglicht.

Energiespeicher der in Rede stehenden Art unterliegen oftmals der Alterung, welche sich in einer Veränderung der beiden vorgenannten Parameter bemerkbar macht. Durch die Auslösung des Signals kann beispielsweise ein rechtzeitiger Austausch eines abgenutzten Energiespeichers sichergestellt werden. Darüber hinaus kann das Ergebnis der Ermittlung der Kapazität und/oder des Serienersatzwiderstands bei der Steuerung der Einspeisung von elektrischer Energie in den Energiespeicher und/oder der Entnahme von elektrische Energie aus dem Energiespeicher genutzt werden. So kann beispielsweise ein Kapazitätsschwund bei fortschreitender Alterung und/oder eine Änderung des Serienersatzwiderstands bei fortschreitender Alterung bei der Steuerung der Einspeisung von elektrischer Energie in den Energiespeicher und/oder der Entnahme von elektrischer Energie aus dem Energiespeicher berücksichtigt werden.

Das Verfahren zur Steuerung des Regalbediengeräts sieht erfindungsgemäß vor, dass die Einspeisung von elektrischer Energie in den Energiespeicher und/oder die Entnahme von elektrischer Energie aus dem Energiespeicher derart gesteuert wird, dass die momentane Leistungsaufnahme aus dem Netz einen vorgegebenen Maximalwert nicht überschreitet. Hierdurch können die Leistungsaufnahme aus dem Netz und/oder die momentane Leistungsabgabe an das Netz so gesteuert werden, dass diese auf einen in der Praxis sinnvollen Wert beschränkt wird.

Es ist erfindungsgemäß weiter vorgesehen, dass in dem Fall, dass zur Beschränkung der momentanen Leistungsaufnahme aus dem Netz und/oder der momentanen Leistungsabgabe an das Netz auf den vorgegebenen Wert die Nutzung des Energiespeichers nicht ausreicht, wird die Bewegung des Regalbediengeräts derart gesteuert, dass die momentane Leistungsaufnahme aus dem Netz und/oder die momentane Leistungsabgabe an das Netz einen vorgegebenen Maximalwert nicht überschreitet. Dies kann insbesondere dann sinnvoll sein, wenn der Energiespeicher ausfällt. In der Praxis bedeutet dies, dass insbesondere die Bewegungsgeschwindigkeit, die Beschleunigungswerte und/oder die Verzögerungswerte der Bewegungen des Regalbediengeräts reduziert werden. Dies führt zwar - zunächst - zu einer verminderten Produktivität des Regalbediengeräts, verhindert jedoch eine Überlastung - und damit mögliche Beschädigungen - der Netzinfrastruktur und/oder der Anlageninfrastruktur und/oder das Anfallen übermäßig hoher Betriebskosten durch das Auftreten kostenintensiver Lastspitzen.

Auch kann es sinnvoll sein, dass das Verfahren vorsieht, dass ein Teil der Energie, der beim generatorischen Betrieb der Antriebe zum Verzögern von Bewegungen erzeugt wird, über einen Bremswiderstand abgeführt wird. Dies kann insbesondere dann sinnvoll sein, wenn die gesamte generatorisch erzeugte Energie nicht vollständig vom Energiespeicher aufgenommen werden kann. Auf diese Weise wird auch in diesem Fall einer Rückspeisung in das Netz entgegenwirkt.

Der Bremswiderstand kann genutzt werden, um den Energiespeicher zu entladen. Dies kann beispielsweise zu Wartungszwecken und/oder Reparaturzwecken notwendig werden. Insbesondere kann der Energiespeicher im Fall eines Fehlerfalls, also insbesondere eines Defekts, des Energiespeichers über den Bremswiderstand entladen werden. Ein geladener Energiespeicher kann hierbei ein Unfallrisiko darstellen. Durch die Entladung über den Bremswiderstand kann eine ansonsten aus Sicherheitsgründen regelmäßig notwendige Entladevorrichtung entfallen.

Das Verfahren zur Steuerung des Regalbediengeräts kann vorsehen, dass Fahrbewegungen des Regalbediengeräts in unterschiedlichen Bewegungsrichtungen im Hinblick auf die Reduzierung der von den Antrieben des Regalbediengeräts gemeinsam erzeugten und/oder aufgenommenen elektrischen Gesamtleistung aufeinander abgestimmt werden. Dies kann beispielsweise bedeuten, dass Beschleunigungen und/oder Verzögerungen unterschiedlicher Antriebe zeitlich so aufeinander abgestimmt werden, dass eine Fahrbewegung, die mit der Energieabgabe eines Antriebs einhergeht, zeitgleich mit einer Fahrbewegung, die mit der Energieaufnahme eines anderen Antriebs einhergeht, durchgeführt wird. Dies betrifft insbesondere die Abstimmung von Fahrbewegungen in horizontaler und vertikaler Richtung aufeinander. Dabei kann insbesondere bei vertikalen Bewegungen Leistung generatorisch beim Absenken von Lasten erzeugt werden.

Alternativ und/oder ergänzend können die Fahrbewegungen einer Mehrzahl Regalbediengeräte im Hinblick auf die Reduzierung der von den Antrieben der Regalbediengeräte gemeinsam erzeugten und/oder aufgenommenen elektrischen Gesamtleistung aufeinander abgestimmt werden. Dies kann beispielsweise bedeuten, dass Beschleunigungen eines Regalbediengeräts mit - insbesondere generatorischen - Verzögerungen eines anderen Regalbediengeräts zeitgleich koordiniert werden.

Das Regalbediengerät weist, insbesondere zur Durchführung des vorstehend beschriebenen Verfahrens, eine Steuerungseinrichtung zur Steuerung des Regalbediengeräts auf, die dazu eingerichtet ist, wenigstens einen elektrischen Betriebsparameter des Regalbediengeräts zu überwachen und abhängig von diesem die Einspeisung von elektrischer Energie in den Energiespeicher und/oder die Entnahme von elektrischer Energie aus dem Energiespeicher zu steuern. Bei dem Energiespeicher des Regalbediengeräts kann es sich insbesondere um einen Superkondensator handeln. Dieser kann eine Kapazität von mindestens einem Farad, insbesondere mindestens 100 Farad, aufweisen.

Der Energiespeicher kann eine Mehrzahl Zellen aufweisen. die Zellen sind insbesondere in Reihe geschaltet. Die Verschaltung der Zellen kann dabei so erfolgen, dass eine bestimmte Betriebsspannung, z.B. 38 V, 96 V, 150 V oder 625 V, erreichbar ist, durch den Energiespeicher bereitgestellt werden kann, ohne dass die Betriebsspannung der einzelnen Zellen einen signifikant unter dem Wert dieser Betriebsspannung des Energiespeichers liegenden kritischen Wert von beispielsweise 2,5 V nicht überschritten wird.

Der Energiespeicher kann über einen Gleichspannungswandler mit dem Zwischenkreis eines Umrichters, der das Regalbediengerät mit dem Netz verbindet, verbunden sein. Alternativ und/oder ergänzend ist es möglich, den Energiespeicher ohne einen zwischengeschalteten Gleichspannungswandler mit dem Zwischenkreis zu verbinden. Dann ist es in der Praxis sinnvoll, wenn die Steuerung derart erfolgt, dass die im Energiespeicher gespeicherte Energiemenge 80 %, insbesondere 90 % der maximal im Energiespeicher speicherbaren Energiemenge nicht unterschreitet. Dies dient dazu, einen Spannungsabfall im Zwischenkreis und damit eine Verschiebung des Arbeitspunkts der gespeisten Antriebe über ein akzeptables Maß hinaus zu vermeiden.

In der Praxis bedeutet dies, dass die Energiespeicher wesentlich größer dimensioniert werden müssen, als es bei der Verwendung von Gleichspannungswandlern der Fall ist. Diese können die Zwischenkreisspannung konstant halten, während sich die vom Energiespeicher zur Verfügung gestellte Spannung mit der im Energiespeicher gespeicherten Energiemenge, mit anderen Worten mit dessen Ladezustand, ändert.

Bei dem erfindungsgemäßen Regalbediengeräteverbund handelt es sich um eine Mehrzahl Regalbediengeräte, die eine gemeinsame Energieversorgung aufweisen. Die gemeinsame Energieversorgung erfolgt insbesondere über einen Zwischenkreisverbund, d. h. die einzelnen Regalbediengeräte bzw. deren Energieversorgung weisen einen gemeinsamen Umrichterzwischenkreis auf. Der Energiespeicher kann in diesem Fall mit diesem Zwischenkreis verbunden sein.

Der Regalbediengeräteverbund weist eine Steuerungseinrichtung zur Steuerung des Regalbediengeräteverbunds auf, die dazu eingerichtet ist, insbesondere nach dem vorstehend beschriebenen Verfahren, wenigstens einen elektrischen Betriebsparameter des Regalbediengeräts des Regalbediengeräteverbunds zu überwachen und abhängig von diesem die Einspeisung von elektrischer Energie in den Energiespeicher und/oder die Entnahme von elektrischer Energie aus dem Energiespeicher zu steuern.

Weitere praktische Ausführungsformen und Vorteile der Erfindung sind nachfolgend im Zusammenhang mit den Zeichnungen beschrieben. Es zeigen:
- Fig. 1: eine schematische Darstellung beispielhafter Verläufe der vom Netz aufgenommenen Leistung eines Regalbediengeräts, der Gesamtleistung der Antriebe des Regalbediengeräts und der Menge der im Energiespeicher des Regalbediengeräts gespeicherten Energie in einem theoretischen Idealfall,
- Fig. 2: eine schematische Darstellung beispielhafter Verläufe der vom Netz aufgenommenen Leistung eines Regalbediengeräts und der Gesamtleistung der Antriebe des Regalbediengeräts,
- Fig. 3: einen beispielhaften Schaltplan der Energieversorgung eines Regalbediengeräts mit einem Energiespeicher.

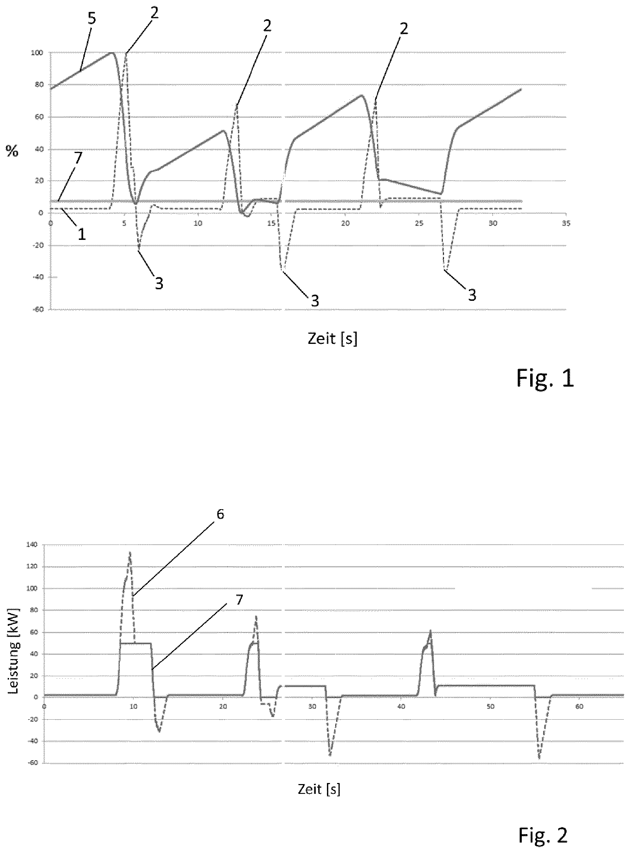

in Fig. 1 ist ein beispielhafter Verlauf 1 der Gesamtleistung der Antriebe eines Regalbediengeräts während eines Regalbedienvorgangs dargestellt. Im Falle eines Regalbediengeräts ohne einen Energiespeicher entspricht der Verlauf 1 - zumindest in etwa - dem Verlauf der vom Regalbediengerät aufgenommenen und/oder abgegebenen Netzleistung. Es ist deutlich erkennbar, dass die für den Regalbedienvorgang benötigte elektrische Energie in Form einiger weniger Lastspitzen 2 aus dem Netz aufgenommen würde. Hinzu kommt, dass in Gestalt weiterer negativer Lastspitzen 3 generatorisch erzeugte Leistung anfällt, die entweder - beispielsweise beim Bremswiderstand - vernichtet oder in das Versorgungsnetz gespeist werden würde, wenn das Regalbediengerät keinen Energiespeicher aufweist.

Das erfindungsgemäße Verfahren ermöglicht es nun, Energie in einem Energiespeicher zwischenzuspeichern. Im Idealfall, d. h., wenn eine theoretisch unbegrenzte Kapazität des Energiespeichers zur Verfügung steht, kann der dargestellte konstante Verlauf 4 der Netzleistung erreicht werden. Deutlich ist zu erkennen, dass der Netzanschluss in diesem Fall nur für einen Bruchteil der Leistung ausgelegt sein muss, die nach dem Stand der Technik - also ohne einen Energiespeicher - notwendig wäre.

Zur Verdeutlichung der Wirkungsweise des Energiespeichers ist der Verlauf 5 der im Energiespeicher gespeicherten Energie ebenfalls dargestellt. Im beispielhaft gezeigten Fall wird durch den beispielhaften Lagerbedienvorgang die Kapazität des Energiespeichers vollständig ausgenutzt. Zwar kann grundsätzlich empirisch ermittelt werden, welche Kapazität ausreicht, um mit hinreichender Wahrscheinlichkeit sämtliche in der Praxis vorkommenden Betriebssituationen abdecken zu können, grundsätzlich führt dies jedoch zu vergleichsweise hohen benötigten Kapazitäten und damit vergleichsweise hohen Kosten für die Energiespeicher.

In Fig. 2 ist daher eine alternative Betriebsweise dargestellt. Dort ist ebenfalls ein beispielhafter Verlauf 6 der Gesamtleistung der Antriebe während eines beispielhaften Regalbedienvorgangs dargestellt. Bei dem dort dargestellten Verfahren wird die Einspeisung von elektrischer Energie in den Energiespeicher und/oder die Entnahme von elektrischer Energie aus dem Energiespeicher jedoch so gesteuert, dass die Leistungsaufnahme aus dem Netz einen vorgegebenen Wert - dieser kann wie im gezeigten Beispiel ca. 50 KW betragen - nicht überschreitet. Die Steuerung erfolgt weiterhin derart, dass keine Leistungsabgabe an das Netz erfolgt. Der resultierende Verlauf 7 der Netzleistung ist in Fig. 2 ebenfalls dargestellt. Mit einem derartigen Verfahren zur Steuerung des Regalbediengeräts lässt sich die Netzleistung, die zur Deckung der Lastspitzen zur Verfügung gestellt werden muss, wirksam auf einen sinnvollen Wert begrenzen. Gleichzeitig wird eine wesentlich geringere Kapazität des Energiespeichers benötigt als in dem in Fig. 1 beispielhaft dargestellten Fall.

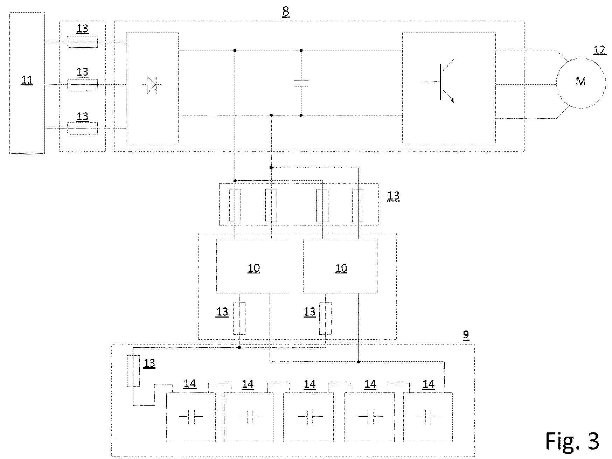

In Fig. 3 ist ein schematischer Schaltplan einer Energieversorgung eines Regalbediengeräts bzw. eines Regalbediengeräteverbunds dargestellt. Die Energieversorgung weist einen Umrichter 8 auf. Ein Energiespeicher 9 ist mit dem Zwischenkreis des Umrichters 8 verbunden. Diese Verbindung kann - wie im gezeigten Beispiel - über wenigstens einen Gleichstromsteller 10 erfolgen. Im gezeigten Beispiel sind zwei Gleichstromsteller 10 vorhanden.

Der Umrichter 8 ist mit einem Netzanschluss 11 eines elektrischen Versorgungsnetzes verbunden. Ausgangsseitig ist der Umrichter 8 mit den Antrieben des Lagerbediengeräts bzw. des Lagerbediengeräteverbunds verbunden. Beispielhaft ist ein einzelner Antrieb 12 in Fig. 3 dargestellt. Es versteht sich, dass die Energieversorgung des Regalbediengeräts bzw. des Regalbediengeräteverbunds noch weitere Bestandteile, insbesondere weitere Antriebe, Umrichter und/oder weitere Bestandteile dargestellten Typs aufweisen kann. In dem in Fig. 3 beispielhaft wiedergegebenen Schaltplan sind beispielsweise eine Mehrzahl Sicherungen 13 dargestellt.

Der Energiespeicher 9 kann - wie im gezeigten Beispiel - eine Mehrzahl, insbesondere in Reihe geschalteter, Zellen 14 aufweisen. Hierdurch wird es möglich, die Spannung der Einzelzelle 14 gegenüber der insgesamt bereitgestellten Betriebsspannung des Energiespeichers 9 klein zu halten. Auch kann eine Mehrzahl Energiespeicher 9, beispielsweise über mindestens einen Gleichstromsteller 10, mit dem gleichen Zwischenkreis verbunden sein.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Verlauf Gesamtleistung Antriebe
- 2: Lastspitzen
- 3: negative Lastspitzen
- 4: Verlauf Netzleistung
- 5: Verlauf gespeicherte Energie
- 6: Verlauf Gesamtleistung Antriebe
- 7: Verlauf Netzleistung
- 8: Umrichter
- 9: Energiespeicher
- 10: Gleichstromsteller
- 11: Netzanschluss
- 12: Antrieb
- 13: Sicherung
- 14: Zelle

## Patentansprüche

1. Verfahren zur Steuerung eines Regalbediengeräts, wobei elektrische Energie in einem Energiespeicher (9), insbesondere einem Superkondensator, zwischengespeichert wird, wobei wenigstens ein elektrischer Betriebsparameter des Regalbediengeräts überwacht und abhängig von diesem elektrischen Betriebsparameter die Einspeisung von elektrischer Energie in den Energiespeicher (9) und/oder die Entnahme von elektrischer Energie aus dem Energiespeicher (9) gesteuert wird, **dadurch gekennzeichnet, dass** es sich bei dem wenigstens einen elektrischen Betriebsparameter des Regalbediengeräts um die momentane elektrische Leistungsaufnahme aus dem Energieversorgungsnetz und/oder Leistungsabgabe des Regalbediengeräts in das Energieversorgungsnetz handelt, wobei die Einspeisung von elektrischer Energie in den Energiespeicher (9) und/oder die Entnahme von elektrischer Energie aus dem Energiespeicher (9) derart gesteuert wird, dass die momentane Leistungsaufnahme aus dem Netz und/oder die momentane Leistungsabgabe an das Netz einen vorgegebenen Maximalwert nicht überschreitet, wobei in dem Fall, dass zur Beschränkung der momentanen Leistungsaufnahme aus dem Netz und/oder der momentanen Leistungsabgabe an das Netz auf den vorgegebenen Wert die Nutzung des Energiespeichers (9) nicht ausreicht, die Bewegung des Regalbediengeräts derart gesteuert wird, dass die momentane Leistungsaufnahme aus dem Netz und/oder die momentane Leistungsabgabe an das Netz einen vorgegebenen Maximalwert nicht überschreitet.

2. Verfahren nach einem der vorigen Ansprüche, **dadurch gekennzeichnet, dass** es sich bei dem wenigstens einen elektrischen Betriebsparameter des Regalbediengeräts um die gemeinsame Leistungsaufnahme und/oder gemeinsame Leistungsabgabe einer Mehrzahl Antriebe, insbesondere sämtlicher Antriebe, des Regalbediengeräts, handelt.

3. Verfahren nach einem der vorigen Ansprüche, **dadurch gekennzeichnet, dass** die momentane Leistungsaufnahme und/oder Leistungsabgabe des Regalbediengeräts dadurch ermittelt werden, dass ein Stromwandler den Netzstrom erfasst und der ermittelte Wert für den Netzstrom mit dem erfassten Wert der Zwischenkreisspannung eines Umrichters des Regalbediengeräts verrechnet wird, wobei eine weitere Verrechnung mit einer gerätespezifischen Größe, insbesondere Konstante, erfolgt.

4. Verfahren nach einem der vorigen Ansprüche, **dadurch gekennzeichnet, dass** eine Größe, insbesondere das Ausgangssignal des Stromwandlers, gleichgerichtet und/oder geglättet wird, um die Netzleistung zu ermitteln.

5. Verfahren nach einem der vorigen Ansprüche, **dadurch gekennzeichnet, dass** die Spannung einer Motorphase gemessen und aus dieser die Wirkleistung des Motors ermittelt, wird, um die Netzleistung, insbesondere über ein Verlustmodell, zu ermitteln.

6. Verfahren nach einem der vorigen Ansprüche, **dadurch gekennzeichnet, dass** die Steuerung der Einspeisung von elektrischer Energie in den Energiespeicher (9) und/oder der Entnahme von elektrischer Energie aus dem Energiespeicher (9) in Abhängigkeit von wenigstens einer zukünftigen Fahrbewegung des Regalbediengeräts erfolgt, wobei insbesondere die Menge der im Energiespeicher (9) gespeicherten Energie derart angepasst wird, dass die im Rahmen der zukünftigen Fahrbewegung vom Energiespeicher aufzunehmende (9) und/oder abzugebende Energie vom Energiespeicher (9) aufgenommen und/oder abgegeben werden kann.

7. Verfahren nach einem der vorigen Ansprüche, **dadurch gekennzeichnet, dass** Daten betreffend wenigstens einen zukünftigen Regalbedienvorgang, insbesondere Daten betreffend zur Durchführung eines zukünftigen Regalbedienvorgangs notwendigen Fahrbewegungen des Regalbediengeräts, in einer Datenspeichereinrichtung gespeichert und für die Steuerung der Einspeisung von elektrischer Energie in den Energiespeicher (9) und/oder der Entnahme von elektrischer Energie aus dem Energiespeicher (9) genutzt werden.

8. Verfahren nach einem der vorigen Ansprüche, **dadurch gekennzeichnet, dass** der Serienersatzwiderstand und/oder die Kapazität des Energiespeichers (9) ermittelt und abhängig vom Ergebnis der Ermittlung insbesondere bei Überschreitung und/oder Unterschreitung eines vorgegebenen Grenzwertes für den Serienersatzwiderstand und/oder die Kapazität ein Signal ausgegeben und/oder das Ergebnis der Ermittlung bei der Steuerung bei der Einspeisung von elektrischer Energie in den Energiespeicher (9) und/oder der Entnahme von elektrischer Energie aus dem Energiespeicher (9) genutzt wird.

9. Verfahren nach einem der vorigen Ansprüche, **dadurch gekennzeichnet, dass** die Bewegung des Regalbediengeräts bei einem Ausfall des Energiespeichers (9) derart gesteuert wird, dass die momentane Leistungsaufnahme aus dem Netz und/oder die momentane Leistungsabgabe an das Netz einen vorgegebenen Maximalwert nicht überschreitet.

10. Verfahren nach einem der vorigen Ansprüche, **dadurch gekennzeichnet, dass** Fahrbewegungen des Regalbediengeräts in unterschiedlichen Bewegungsrichtungen, insbesondere in horizontaler und vertikaler Richtung, im Hinblick auf die Reduzierung der von den Antrieben des Regalbediengeräts gemeinsam erzeugten und/oder aufgenommenen elektrischen Gesamtleistung aufeinander abgestimmt werden.

11. Verfahren nach einem der vorigen Ansprüche, **dadurch gekennzeichnet, dass** die Fahrbewegungen einer Mehrzahl Regalbediengeräte im Hinblick auf die Reduzierung der von den Antrieben der Regalbediengeräte gemeinsam erzeugten und/oder aufgenommenen elektrischen Gesamtleistung aufeinander abgestimmt werden.

12. Regalbediengerät, mit einem Energiespeicher (9), insbesondere einem Superkondensator, zur Speicherung elektrischer Energie, wobei das Regalbediengerät eine Steuerungseinrichtung zur Steuerung des Regalbediengeräts, insbesondere nach einem Verfahren nach einem der vorigen Ansprüche 1 bis 11, aufweist, die dazu eingerichtet ist, wenigstens einen elektrischen Betriebsparameter des Regalbediengeräts zu überwachen und abhängig von diesem die Einspeisung von elektrischer Energie in den Energiespeicher (9) und/oder die Entnahme von elektrischer Energie aus dem Energiespeicher (9) zu steuern, **dadurch gekennzeichnet, dass** es sich bei dem wenigstens einen elektrischen Betriebsparameter des Regalbediengeräts um die momentane elektrische Leistungsaufnahme aus dem Energieversorgungsnetz und/oder Leistungsabgabe des Regalbediengeräts in das Energieversorgungsnetz handelt, wobei die Einspeisung von elektrischer Energie in den Energiespeicher (9) und/oder die Entnahme von elektrischer Energie aus dem Energiespeicher (9) derart gesteuert wird, dass die momentane Leistungsaufnahme aus dem Netz und/oder die momentane Leistungsabgabe an das Netz einen vorgegebenen Maximalwert nicht überschreitet, wobei in dem Fall, dass zur Beschränkung der momentanen Leistungsaufnahme aus dem Netz und/oder der momentanen Leistungsabgabe an das Netz auf den vorgegebenen Wert die Nutzung des Energiespeichers (9) nicht ausreicht, die Bewegung des Regalbediengeräts derart gesteuert wird, dass die momentane Leistungsaufnahme aus dem Netz und/oder die momentane Leistungsabgabe an das Netz einen vorgegebenen Maximalwert nicht überschreitet.

13. Regalbediengeräteverbund mit einer Mehrzahl Regalbediengeräte, die eine gemeinsame Energieversorgung, insbesondere über einen Zwischenkreisverbund, aufweist und mit einem Energiespeicher (9), insbesondere einem Superkondensator, zur Speicherung elektrischer Energie, wobei der Regalbediengeräteverbund eine Steuerungseinrichtung zur Steuerung des Regalbediengeräteverbunds, insbesondere nach einem Verfahren nach einem der vorigen Ansprüche 1 bis 11, aufweist, die dazu eingerichtet ist, wenigstens einen elektrischen Betriebsparameter der Regalbediengeräte zu überwachen und abhängig von diesem die Einspeisung von elektrischer Energie in den Energiespeicher (9) und/oder die Entnahme von elektrischer Energie aus dem Energiespeicher (9) zu steuern, **dadurch gekennzeichnet, dass** es sich bei dem wenigstens einen elektrischen Betriebsparameter des Regalbediengeräts um die momentane elektrische Leistungsaufnahme aus dem Energieversorgungsnetz und/oder Leistungsabgabe des Regalbediengeräts in das Energieversorgungsnetz handelt, wobei die Einspeisung von elektrischer Energie in den Energiespeicher (9) und/oder die Entnahme von elektrischer Energie aus dem Energiespeicher (9) derart gesteuert wird, dass die momentane Leistungsaufnahme aus dem Netz und/oder die momentane Leistungsabgabe an das Netz einen vorgegebenen Maximalwert nicht überschreitet, wobei in dem Fall, dass zur Beschränkung der momentanen Leistungsaufnahme aus dem Netz und/oder der momentanen Leistungsabgabe an das Netz auf den vorgegebenen Wert die Nutzung des Energiespeichers (9) nicht ausreicht, die Bewegung des Regalbediengeräts derart gesteuert wird, dass die momentane Leistungsaufnahme aus dem Netz und/oder die momentane Leistungsabgabe an das Netz einen vorgegebenen Maximalwert nicht überschreitet.

## Claims

1. Method for controlling a storage and retrieval device, wherein electrical energy is temporarily stored in an energy storage device (9), in particular a supercapacitor, wherein at least one electrical operational parameter of the storage and retrieval device is monitored and depending on this electrical operational parameter, feeding of electrical energy into the energy storage device (9) and/or drawing of electrical energy from the electrical energy device (9) is controlled, **characterized in that** the at least one electrical operational parameter of the storage and retrieval device is the momentary electrical power consumption from the power grid and/or power output of the storage and retrieval device into the power grid, wherein the feeding of electrical energy into the energy storage device (9) and/or the drawing of electrical energy from the energy storage device (9) is controlled such that the momentary power consumption from the grid and/or power output into the grid does not exceed a predefined maximum value, wherein in case that use of the energy storage device (9) is not sufficient for limiting the momentary power consumption from the grid and/or the momentary power output into the grid to the predefined value, movement of the storage and retrieval device is controlled such that the momentary power consumption from the grid and/or the momentary power output into the grid does not exceed a predefined maximum value.

2. Method according to any one of the preceding claims, **characterized in that** the at least one electrical operational parameter of the storage and retrieval device is the combined power consumption and/or the combined power output of a plurality of drives, in particular all of the drives, of the storage and retrieval device.

3. Method according to any one of the preceding claims, **characterized in that** the momentary power consumption and/or power output of the storage and retrieval device is determined by a current transformer measuring the mains current and the value determined for the mains current being offset against the measured value of the intermediate circuit voltage of a converter of the storage and retrieval device, wherein a further offsetting is performed against a device-specific parameter, in particular a constant.

4. Method according to any one of the preceding claims, **characterized in that** a parameter, in particular the output signal of the current transformer, is rectified and/or smoothed in order to determine the mains power.

5. Method according to any one of the preceding claims, **characterized in that** the voltage of a motor phase is measured and based on same the effective power of the motor is determined in order to determine the mains power, in particular via a loss model.

6. Method according to any one of the preceding claims, **characterized in that** controlling feeding of electrical energy into the energy storage device (9) and/or drawing of electrical energy from the energy storage device (9) is performed depending on at least one future travel movement of the storage and retrieval device, wherein in particular the quantity of the energy stored in the energy storage device (9) is adjusted such that the energy to be received and/or outputted by the energy storage device (9) in connection with the future travel movement can be received and/or outputted by the energy storage device (9).

7. Method according to any one of the preceding claims, **characterized in that** data concerning at least one future storage and/or retrieval operation, in particular data concerning travel movements of the storage and retrieval device required for a future storage and/or retrieval operation, are stored in a data storage device and are used for controlling the feeding of electrical energy into the energy storage device (9) and/or the drawing of electrical energy from the energy storage device (9).

8. Method according to any one of the preceding claims, **characterized in that** the equivalent series resistance and/or the capacitance of the energy storage device (9) is determined and depending on the result of the determination, in particular in the event of the equivalent series resistance and/or capacitance exceeding and/or falling below a predefined limit value, a signal is outputted and/or the result of the determination is used on controlling the feeding of electrical energy into the energy storage device (9) and/or the drawing of electrical energy from the energy storage device (9).

9. Method according to any one of the preceding claims, **characterized in that** in the event of a malfunction of the energy storage device (9), the movement of the storage and retrieval device is controlled such that the momentary power consumption from the grid and/or the momentary power output into the grid does not exceed a predefined maximum value.

10. Method according to any one of the preceding claims, **characterized in that** travel movements of the storage and retrieval device in different directions of movement, in particular in a horizontal and vertical direction, are brought into agreement with each other with a view to reducing the total electrical power jointly generated and/or received by the drives of the storage and retrieval device.

11. Method according to any one of the preceding claims, **characterized in that** the travel movements of a plurality of storage and retrieval devices are brought into agreement with each other with a view to reducing the total electrical power jointly generated and/or received by the drives of the storage and retrieval devices.

12. Storage and retrieval device having an energy storage device (9), in particular a supercapacitor, for storing electrical energy, wherein the storage and retrieval device has a control device for controlling the storage and retrieval device, in particular according to a method according to any one of the preceding claims 1 to 11, which control device is configured to monitor at least one electrical operational parameter of the storage and retrieval device and, depending on said parameter, to control the feeding of electrical energy into the energy storage device (9) and/or the drawing of electrical energy from the energy storage device (9), **characterized in that** the at least one electrical operational parameter of the storage and retrieval device is the momentary electrical power consumption from the power grid and/or power output of the storage and retrieval device into the power grid, wherein the feeding of electrical energy into the energy storing device (9) and/or the drawing of electrical energy from the energy storage device (9) is controlled such that the momentary power consumption from the grid and/or the momentary power output into the grid does not exceed a predefined maximum value, wherein in case that use of the energy storage device (9) is not sufficient for limiting the momentary power consumption from the grid and/or the momentary power output into the grid to the predefined value, movement of the storage and retrieval device is controlled such that the momentary power consumption from the grid and/or the momentary power output into the grid does not exceed a predefined maximum value.

13. Storage and retrieval device compound comprising a plurality of storage and retrieval devices, having a common energy supply, in particular via an intermediate circuit compound, and having an energy storage device (9), in particular a supercapacitor, for storing electrical energy, wherein the storage and retrieval device compound has a control device for controlling the storage and retrieval device compound, in particular according to a method according to any one of the preceding claims 1 to 11, which control device is configured to monitor at least one electrical operational parameter of the storage and retrieval devices and, depending on said parameter, to control the feeding of electrical energy into the energy storage device (9) and/or the drawing of electrical energy from the energy storage device (9), **characterized in that** the at least one electrical operational parameter of the storage and retrieval device is the momentary electrical power consumption from the power grid and/or power output of the storage and retrieval device into the power grid, wherein the feeding of electrical energy into the energy storing device (9) and/or the drawing of electrical energy from the energy storage device (9) is controlled such that the momentary power consumption from the grid and/or the momentary power output into the grid does not exceed a predefined maximum value, wherein in case that use of the energy storage device (9) is not sufficient for limiting the momentary power consumption from the grid and/or the momentary power output into the grid to the predefined value, movement of the storage and retrieval device is controlled such that the momentary power consumption from the grid and/or the momentary power output into the grid does not exceed a predefined maximum value.

## Revendications

1. Procédé de commande d'un transstockeur, de l'énergie électrique étant stockée temporairement dans un accumulateur d'énergie (9), en particulier un supercondensateur, au moins un paramètre de fonctionnement électrique du transtockeur étant surveillé et l'injection d'énergie électrique dans l'accumulateur d'énergie (9) et/ou le prélèvement d'énergie électrique à partir de l'accumulateur d'énergie (9) étant commandés en fonction de ce paramètre de fonctionnement électrique, **caractérisé en ce que** l'au moins un paramètre de fonctionnement électrique du transtockeur est la puissance électrique momentanée absorbée à partir du réseau d'alimentation en énergie et/ou la puissance délivrée par le transtockeur au réseau d'alimentation en énergie, l'injection d'énergie électrique dans l'accumulateur d'énergie (9) et/ou le prélèvement d'énergie électrique à partir de l'accumulateur d'énergie (9) étant commandés de telle sorte que la puissance momentanée absorbée à partir du réseau et/ou la puissance momentanée délivrée au réseau ne dépasse pas une valeur maximale prédéfinie, le mouvement du transtockeur, dans le cas où l'utilisation de l'accumulateur d'énergie (9) ne suffit pas pour limiter la puissance momentanée absorbée à partir du réseau et/ou la puissance momentanée délivrée au réseau à la valeur prédéfinie, étant commandé de telle sorte que la puissance momentanée absorbée à partir du réseau et/ou la puissance momentanée délivrée au réseau ne dépasse pas une valeur maximale prédéfinie.

2. Procédé selon l'une des revendications précédentes, **caractérisé en ce que** l'au moins un paramètre de fonctionnement électrique du transtockeur est la puissance absorbée commune et/ou la puissance délivrée commune d'une pluralité de mécanismes d'entraînement, en particulier de tous les mécanismes d'entraînement, du transtockeur.

3. Procédé selon l'une des revendications précédentes, **caractérisé en ce que** la puissance momentanée absorbée et/ou la puissance délivrée du transtockeur sont déterminées par le fait qu'un transformateur de courant détecte le courant du réseau et que la valeur déterminée pour le courant du réseau est compensée par la valeur détectée de la tension du circuit intermédiaire d'un convertisseur statique du transstockeur, une compensation supplémentaire étant effectuée avec une grandeur spécifique à l'appareil, en particulier une constante.

4. Procédé selon l'une des revendications précédentes, **caractérisé en ce qu'**une grandeur, en particulier le signal de sortie du convertisseur de courant, est redressée et/ou lissée en vue de déterminer la puissance de réseau.

5. Procédé selon l'une des revendications précédentes, **caractérisé en ce que** la tension d'une phase du moteur est mesurée et la puissance active du moteur est déterminée à partir de celle-ci en vue de déterminer la puissance de réseau, en particulier par l'intermédiaire d'un modèle de perte.

6. Procédé selon l'une des revendications précédentes, **caractérisé en ce que** la commande de l'injection d'énergie électrique dans l'accumulateur d'énergie (9) et/ou du prélèvement d'énergie électrique de l'accumulateur d'énergie (9) s'effectue en fonction d'au moins un mouvement de déplacement futur du transtockeur, la quantité d'énergie stockée dans l'accumulateur d'énergie (9) étant en particulier adaptée de telle sorte que l'énergie à absorber et/ou à délivrer par l'accumulateur d'énergie (9) dans le cadre du mouvement d'entraînement futur peut être absorbée et/ou délivrée par l'accumulateur d'énergie (9).

7. Procédé selon l'une des revendications précédentes, **caractérisé en ce que** des données concernant au moins une future opération de transtockage, en particulier des données concernant les mouvements de déplacement du transtockeur nécessaires à l'exécution d'une future opération de transtockage, sont mémorisées dans un dispositif de mémorisation de données et utilisées pour la commande de l'injection d'énergie électrique dans l'accumulateur d'énergie (9) et/ou le prélèvement d'énergie électrique à partir de l'accumulateur d'énergie (9).

8. Procédé selon l'une des revendications précédentes, **caractérisé en ce que** la résistance équivalente en série et/ou la capacité de l'accumulateur d'énergie (9) est déterminée et, en fonction du résultat de la détermination, en particulier en cas de franchissement vers le haut et/ou de franchissement vers le bas d'une valeur limite prédéfinie pour la résistance équivalente en série et/ou la capacité, un signal est délivré et/ou le résultat de la détermination lors de la commande est utilisé lors de l'injection d'énergie électrique dans l'accumulateur d'énergie (9) et/ou du prélèvement d'énergie électrique à partir de l'accumulateur d'énergie (9).

9. Procédé selon l'une des revendications précédentes, **caractérisé en ce que** le mouvement du transtockeur dans le cas d'une panne de l'accumulateur d'énergie (9) est commandé de telle sorte que la puissance momentanée absorbée à partir du réseau et/ou la puissance momentanée délivrée au réseau ne dépasse pas une valeur maximale prédéfinie.

10. Procédé selon l'une des revendications précédentes, **caractérisé en ce que** des mouvements de déplacement du transtockeur dans différentes directions de déplacement, en particulier dans la direction horizontale et verticale, sont coordonnés entre eux en ce qui concerne la réduction de la puissance électrique totale produite et/ou absorbée conjointement par les mécanismes d'entraînement du transtockeur.

11. Procédé selon l'une des revendications précédentes, **caractérisé en ce que** les mouvements de déplacement d'une pluralité de transtockeurs sont coordonnés entre eux en ce qui concerne la réduction de la puissance électrique totale produite et/ou absorbée conjointement par les mécanismes d'entraînement des transtockeurs.

12. Transtockeur, comprenant un accumulateur d'énergie (9), en particulier un supercondensateur, destiné à stocker de l'énergie électrique, le transtockeur possédant un dispositif de commande destiné à commander le transtockeur, en particulier conformément à un procédé selon l'une des revendications 1 à 11 précédentes, lequel est conçu pour surveiller au moins un paramètre de fonctionnement électrique du transtockeur et pour commander l'injection d'énergie électrique dans l'accumulateur d'énergie (9) et/ou le prélèvement d'énergie électrique à partir de l'accumulateur d'énergie (9) en fonction de celui-ci, **caractérisé en ce que** l'au moins un paramètre de fonctionnement électrique du transtockeur est la puissance électrique momentanée absorbée à partir du réseau d'alimentation en énergie et/ou la puissance délivrée par le transtockeur au réseau d'alimentation en énergie, l'injection d'énergie électrique dans l'accumulateur d'énergie (9) et/ou le prélèvement d'énergie électrique à partir de l'accumulateur d'énergie (9) étant commandés de telle sorte que la puissance momentanée absorbée à partir du réseau et/ou la puissance momentanée délivrée au réseau ne dépasse pas une valeur maximale prédéfinie, le mouvement du transtockeur, dans le cas où l'utilisation de l'accumulateur d'énergie (9) ne suffit pas pour limiter la puissance momentanée absorbée à partir du réseau et/ou la puissance momentanée délivrée au réseau à la valeur prédéfinie, étant commandé de telle sorte que la puissance momentanée absorbée à partir du réseau et/ou la puissance momentanée délivrée au réseau ne dépasse pas une valeur maximale prédéfinie.

13. Groupement de transtockeurs comprenant une pluralité de transtockeurs, qui possède une alimentation en énergie commune, en particulier par le biais d'un ensemble de circuits intermédiaires, et comprenant un accumulateur d'énergie (9), en particulier un supercondensateur, destiné à stocker de l'énergie électrique, le groupement de transtockeurs possédant un dispositif de commande destiné à commander le groupement de transtockeurs, en particulier conformément à un procédé selon l'une des revendications 1 à 11 précédentes, lequel est conçu pour surveiller au moins un paramètre de fonctionnement électrique des transtockeurs et pour commander l'injection d'énergie électrique dans l'accumulateur d'énergie (9) et/ou le prélèvement d'énergie électrique à partir de l'accumulateur d'énergie (9) en fonction de celui-ci, **caractérisé en ce que** l'au moins un paramètre de fonctionnement électrique du transtockeur est la puissance électrique momentanée absorbée à partir du réseau d'alimentation en énergie et/ou la puissance délivrée par le transtockeur au réseau d'alimentation en énergie, l'injection d'énergie électrique dans l'accumulateur d'énergie (9) et/ou le prélèvement d'énergie électrique à partir de l'accumulateur d'énergie (9) étant commandés de telle sorte que la puissance momentanée absorbée à partir du réseau et/ou la puissance momentanée délivrée au réseau ne dépasse pas une valeur maximale prédéfinie, le mouvement du transtockeur, dans le cas où l'utilisation de l'accumulateur d'énergie (9) ne suffit pas pour limiter la puissance momentanée absorbée à partir du réseau et/ou la puissance momentanée délivrée au réseau à la valeur prédéfinie, étant commandé de telle sorte que la puissance momentanée absorbée à partir du réseau et/ou la puissance momentanée délivrée au réseau ne dépasse pas une valeur maximale prédéfinie.
